# EUROPÄISCHE PATENTANMELDUNG

(11) **EP 2 354 145 A1**
(43) Veröffentlichungstag der Anmeldung: **10.08.2011**
(21) Anmeldenummer: 10152577.2
(22) Anmeldetag: 03.02.2010
(51) Int. Cl.: C07F 7/18, C08G 77/38, C08L 9/00, C08L 21/00, C08L 23/16, C08L 83/06

(54) **Verwendung von Polyorganosiloxanen bei der Verarbeitung und Vulkanisation von Kautschuk**

(71) Anmelder: Schill + Seilacher "Struktol" GmbH, 22113 Hamburg (DE)
(72) Erfinder: Börger, Volker, 22765, Hamburg (DE); Dittrich, Uwe, 01445, Radebeul (DE); Klose, Theresia, 01187, Dresden (DE)
(74) Vertreter: UEXKÜLL & STOLBERG

(57) **Zusammenfassung**

Die Erfindung betrifft die Verwendung von Polyorganosiloxanen mit 3 oder mehr Siloxaneinheiten, die mindestens einen organischen Anteil R¹ aufweisen, wobei R¹ mindestens eine Kohlenstoff-Kohlenstoff-Mehrfachbindung aufweist, und wobei die Anwesenheit von Kohlenwasserstoffanteilen mit einer Kettenlänge von 5 bis 50 Kohlenstoffatomen ausgeschlossen ist, als Additiv bei der Verarbeitung von Kautschuk. Die Polyorganosiloxane werden bei der Verarbeitung und Vulkanisation von Kautschuk eingesetzt und reaktiv in diesen eingebunden. Sie ergeben eine Senkung der Viskosität des Kautschuks bei der Verarbeitung und gegebenenfalls eine Verbesserung der mechanischen Eigenschaften des vulkanisierten Kautschuks.

## Beschreibung

Die vorliegende Erfindung betrifft die Verwendung von Polyorganosiloxanen als Additiv bei der Verarbeitung von Kautschuk. Das Polyorganosiloxan kann als reine Substanz, als Masterbatch oder als Abmischung eingesetzt werden. Ferner betrifft die Erfindung ein Verfahren zur peroxidischen Vulkanisation von Kautschuk sowie einen vulkanisierten Kautschuk (Vulkanisat) .

Verschiedene Kautschuktypen und Kautschukmischungen lassen sich aufgrund ihrer hohen Viskosität bzw. ihrer Tendenz, auf dem Walzwerk oder im Innenmischer zu stark zu haften, nur schlecht verarbeiten. Beispielsweise kann es bei einer Spritzgussverarbeitung vorkommen, dass nicht alle Kavitäten einer Form ausgefüllt werden, was eine hohe Ausschussrate zur Folge hat. Aus diesem Grunde werden dem Kautschuk als Additive sogenannte Fließverbesserer (Viskositätssenkungsmittel) zugesetzt. Beispielsweise ist es üblich, Fettsäurederivate, Wachse oder Silikonverbindungen als Fließverbesserer zuzugeben.

Durch die Verwendung von Fließverbesserern wird wie gewünscht die Viskosität des Kautschuks bei der Verarbeitung gesenkt. Allerdings wird der Kautschuk durch die Zugabe des Fließverbesserers auch verdünnt. Dies hat zur Folge, dass sich die mechanischen Eigenschaften des vulkanisierten Kautschuks im Vergleich mit einem ohne Fließverbesserer vulkanisierten Kautschuk in der Regel verschlechtern. Außerdem wird bei Zusatz von Fließverbesserern in bestimmten Fällen, insbesondere bei hohen Additiv-Konzentrationen, in dem erhaltenen Vulkanisat das Auftreten von zumeist unerwünschten Ausblühungen beobachtet.

Ferner ist bekannt, dass sich die gewünschten mechanischen Eigenschaften (wie Druckverformungsrest, Modul und Reißfestigkeit) von Kautschuk durch Vulkanisation verbessern bzw. überhaupt erst erzielen lassen. Die Vulkanisation vernetzt die langkettigen Kautschukmoleküle, und aus dem Rohkautschuk mit plastischen Eigenschaften bildet sich vulkanisierter Kautschuk mit elastischen Eigenschaften (Vulkanisat). Ein Kautschuk kann auf vielfältige Weise vernetzt werden. Beispielsweise können für die Vernetzung Schwefel in Verbindung mit den bekannten Beschleunigersystemen oder organische Peroxide wie beispielsweise Bis(1-methyl-1-phenylethyl)peroxid (Dicumylperoxid) benutzt werden. Die peroxidische Vernetzung ist in bestimmten Fällen bevorzugt, da ausgewählte mechanische Werte, wie beispielsweise der Druckverformungsrest, im Vergleich zur Schwefel-Vulkanisation verbessert werden. Insbesondere ist die thermische Beständigkeit (Alterungsresistenz) des mit peroxidischer Vulkanisation erhaltenen Vulkanisats einem Vulkanisat, das mit Schwefel vernetzt wurde, deutlich überlegen. Der Grund dafür ist die höhere Dissoziationsenergie von Kohlenstoff-Kohlenstoff-Bindungen im Vergleich zu Kohlenstoff-Schwefel- bzw. Schwefel-Schwefel-Bindungen.

In der vorliegenden Beschreibung wird der Begriff "Kautschukmischung" synonym mit dem Begriff "Kautschuk" verwendet, weil häufig Mischungen von verschiedenen Kautschuktypen eingesetzt werden.

Viele Kautschuke wie beispielsweise Naturkautschuk (NR) und Ethylen-Propylen-Dienmonomer-Kautschuk (EPDM) lassen sich sowohl mit Schwefel als auch mit Peroxiden vulkanisieren. Andere Kautschuke wiederum wie beispielsweise Ethylen-AcrylatKautschuk (AEM) lassen sich mit verschiedenen Vulkanisationssystemen (Diaminen, Peroxiden), jedoch nicht mit Schwefel vulkanisieren.

Als Fließverbesserer für Kautschuk sind beispielsweise Silikone bekannt. So ist das Produkt Struktol^{®} WS 180 (Schill + Seilacher "Struktol" GmbH, Hamburg, Bundesrepublik Deutschland) eine Kondensationsprodukt von Fettsäurederivaten und Silikonen.

Die EP 0 247 501 A2 betrifft ein Verfahren zur Herstellung von Methacryloxy- oder Acryloxy-haltigen Organosilanen und Organosiloxanen. Offenbart wird die Herstellung von γ-Methacryloxypropyltrimethoxysilan. Eine Verwendung der Produkte wird nicht gelehrt.

Die US 4,172,101 B1 offenbart Vinylgruppen enthaltene Organopolysiloxane für härtbare Zusammensetzungen, die *in situ* erzeugtes teilchenförmiges Material enthalten.

Die US 2004/0116593 A1 betrifft Polysiloxanpräpolymere mit hohem Brechungsindex, die zur Herstellung von biologisch kompatiblen medizinischen Teilen brauchbar sind, wie intraokularen Linsen.

Die US 2004/0266940 A1 offenbart vulkanisierbare elastomere Zusammensetzungen und deformierbare thermoplastische Zusammensetzungen, die nach der Vulkanisierung oder Härtung umgeformt werden können. Die Polymerzusammensetzungen enthalten ein feinteiliges Material oder Pulver aus einem schmelzbaren Polymer, das in einer Matrix aus einem anderen Polymer eingeschlossen ist. Als vernetzbare Matrixpolymerkomponente ist vorzugsweise eine heißvulkanisierbare Silikonzusammensetzung, die reaktive Polyorganosiloxane mit reaktiven funktionellen Gruppen wie Vinyl- oder Allylgruppen oder (Meth)acrylatgruppen einschließt, vorgesehen.

Die US 5,952,419 B1 offenbart vulkanisierbare Organosiloxan-Polyisobutylen-Zusammensetzungen. Entsprechende vulkanisierte Elastomere besitzen verbesserte Beständigkeit gegenüber Gas-und Dampfpermeabilität.

Die WO 2007/033801 A1 lehrt ein Kautschukcompound. Das Compound umfasst Kautschuk (A) mit mindestens 2 über Hydrosilylierung vernetzbaren funktionellen Gruppen, als Vernetzer (B) ein Hydrosiloxan oder Hydrosiloxanderivat mit mindestens 2 SiH-Gruppen pro Molekül, ein Hydrosilylierungs-Katalysatorsystem (C), mindestens einen Füllstoff (D) und ein über Hydrosilylierung vernetzbares Koagens (E). Bei Anwesenheit basischer Bestandteile, wie sie typischerweise als Katalysatoren verwendet werden, in dem Compound kann es zur Zersetzung der Komponente (B) kommen.

Die EP 0 269 114 A2 beschreibt ein Verfahren zur Herstellung von Acryloxy-enthaltenden Organopolysiloxanen. Dabei werden Epoxidgruppen von Polyorganosiloxanen mit Acrylsäure oder Methacrylsäure umgesetzt und dadurch geöffnet, und die erhaltenen Hydroxygruppen werden anschließend durch Umsetzung mit Acryloylchlorid oder Methacryloylchlorid in Anwesenheit eines Chlorwasserstoff-Akzeptors reagieren gelassen. Beispielhafte Epoxidgruppen sind Glycidether- und Cyclohexylepoxidgruppen. Die Polyorganosiloxane lassen sich härten, wobei die erhaltenen gehärteten Produkte als Klebstoff, Farbe, Beschichtung oder Releasemittel für verschiedene Oberfläche wie Glas, Keramik, Metall, Harze, Papier, Fasern usw. verwendet werden können.

Die DE 30 44 237 A1 offenbart acrylierte Epoxysilikone und diese enthaltenden Präparate. Die acrylierten Epoxysilikone sind Reaktionsprodukt eines Epoxysilikons mit einer Acrylsäure und werden in strahlungshärtbaren Formulierungen verwendet. Sie härten zu einem hochglänzenden Finish aus, der beispielsweise als Lack über einer Drucktinte geeignet ist.

Für Anwendungen, die eine hohe Oxidationsresistenz verlangen, wird bevorzugt Kautschuk ohne ungesättigte Funktionalitäten (zum Beispiel Doppelbindungen) in der Molekülkette eingesetzt. Kautschuk ohne ungesättigte Funktionalitäten ist nicht mit Schwefel vulkanisierbar und wird typischerweise mit Peroxiden vernetzt.

Der Grad der bei der peroxidischen Vulkanisation erreichbaren Vernetzung hängt von mehreren Faktoren ab und ist in bestimmten Fällen nicht ausreichend, so dass vorzugsweise Vernetzungshilfsmittel (Coagenzien) zugegeben werden. Mittels solcher Coagenzien wird die Vernetzungsdichte erhöht und damit im Vergleich mit einer Vulkanisation ohne Vernetzungshilfsmittel eine weitere Verbesserung der mechanischen Werte erreicht. Bekannte Vertreter zur Vernetzung von Kautschuken durch peroxidische Vulkanisation sind Triallylcyanurat (TAC), Triallylisocyanurat (TAIC), Trimethylolpropantrimethacrylat (TMPTMA), Ethylenglycoldimethacrylat (EDMA), 1,6-Hexandioldiacrylat (HDDA) oder N,N'-m-Phenylenbismaleimid (MPBM).

Es ist möglich, der bei der Verwendung von Fließverbesserern möglichen, unerwünschten Verschlechterung der mechanischen Eigenschaften des Vulkanisats durch Verwendung einer besonders hohen Menge Coagenzien entgegenzuwirken. Eine solche Zugabe von Coagenzien führt zu einer Kompensation des Verdünnungseffektes des Fließverbesserers. Jedoch wird durch die Verwendung von Coagenzien in der Regel kein Beitrag zur Absenkung der Mooney-Viskosität geleistet, sondern der Kautschukmischung nur ein weiterer Bestandteil zugefügt. Die schlechte Löslichkeit polarer Coagenzien in unpolaren Kautschuken kann außerdem zu Inhomogenitäten im zu bildenen Netzwerk führen. Dieser Effekt ist bei höheren Dosierungen entsprechend ausgeprägter.

Dem Kautschukverarbeiter/Gummihersteller sind also enge Grenzen gesetzt: Einerseits muss der Kautschuk gut verarbeitbar sein und soll deshalb Fließverbesserer enthalten, andererseits sollen sich die mechanischen Eigenschaften des vulkanisierten Kautschuks durch Zugabe des Fließverbesserers nicht unerwünscht verschlechtern. Darüber hinaus ist in den meisten Fällen unerwünscht, dass die zugegebenen Fließverbesserer durch Ausblühungen an die Oberfläche der Kautschukmischung bzw. des Vulkanisats gelangen. Der Erhalt der mechanischen Eigenschaften macht die Zugabe von (vergleichsweise großen Mengen) Coagenzien notwendig, was wie erwähnt ebenfalls nachteilig sein kann.

Aufgabe der vorliegenden Erfindung war es, Verbindungen bereitzustellen, mit deren Hilfe die Viskosität von Kautschuk bei der Verarbeitung verbessert werden kann, ohne dass sich die mechanischen Eigenschaften des erhaltenen Vulkanisats verschlechtern (beispielsweise der Modul sinkt). Vorzugsweise sollten Verbindungen zur Verfügung gestellt werden, die sowohl eine Senkung der Viskosität der Kautschukmischung bei der Verarbeitung als auch eine Verbesserung der mechanischen Eigenschaften des nach der Vulkanisation erhaltenen Vulkanisats bewirken.

Erfindungsgemäß wurde überraschend gefunden, dass diese Aufgabe durch die Verwendung von bestimmten Polyorganosiloxanen als Additiv bei der Verarbeitung von Kautschuk gelöst wird.

Die erfindungsgemäß verwendeten Polyorganosiloxane zeichnen sich dadurch aus, dass sie 3 oder mehr Siloxaneinheiten besitzen und einen oder mehrere organische Anteile R¹ aufweisen, wobei R¹ eine oder mehrere Kohlenstoff-Kohlenstoff-Mehrfachbindungen besitzt. Ausgeschlossen ist in den erfindungsgemäß verwendeten Polyorganosiloxanen die Anwesenheit eines oder mehrerer langkettiger Kohlenwasserstoffanteile mit einer Kettenlänge von 5 bis 50 Kohlenstoffatomen.

Erfindungsgemäß wird das Polyorganosiloxan bei der (peroxidischen) Vulkanisation reaktiv in den Kautschuk eingebunden, wodurch die Bildung von Ausblühungen an der Oberfläche des vulkanisierten Kautschuks verhindert wird. Durch das erfindungsgemäße Polyorganosiloxan werden die Verarbeitbarkeit und gegebenenfalls auch die Vernetzungsdichte von Kautschuken bei der Vulkanisation verbessert. Vorzugsweise werden sowohl die Verarbeitbarkeit als auch die Vernetzung positiv beeinflusst.

### 1. Organischer Anteil R¹

Erfindungsgemäß eingesetzte Polyorganosiloxane weisen einen oder mehrere organische Anteile R¹ auf, wobei R¹ eine oder mehrere Kohlenstoff-Kohlenstoff-Mehrfachbindungen besitzt.

Es ist bevorzugt, dass die Kohlenstoff-Kohlenstoff-Mehrfachbindung in R¹ eine Kohlenstoff-Kohlenstoff-Doppelbindung ist, beispielsweise in einer Kohlenstoffkette oder einem Ring von Kohlenstoffatomen. In einer bevorzugten Ausführungsform ist der organische Anteil R¹ ein einwertiger Rest.

Besonders bevorzugt sind in allen Ausführungsformen der Erfindung Polyorganosiloxane, deren R¹ mindestens drei Kohlenstoffatome aufweisen, vorzugsweise mindestens vier, insbesondere mindestens fünf, wie beispielsweise mindestens sechs, insbesondere mindestens sieben Kohlenstoffatome.

Es ist für den Fachmann klar, dass das erfindungsgemäße Polyorganosiloxan mindestens zwei Kohlenstoff-Kohlenstoff-Mehrfachbindungen aufweisen muss, um in dem Kautschuk vernetzend wirken zu können. Erfindungsgemäße Polyorgnosiloxane weisen also mindestens zwei Kohlenstoff-Kohlenstoff-Mehrfachbindungen auf. Dies bedeutet, dass, wenn die Gruppe R¹ nur eine einzige Kohlenstoff-Kohlenstoff-Mehrfachbindung aufweist, dann mindestens zwei Gruppen R¹ vorhanden sein müssen; diese Ausführungsform ist bevorzugt. Alternativ ist es möglich, dass eine Gruppe R¹ mindestens zwei Kohlenstoff-Kohlenstoff-Mehrfachbindungen besitzt; diese Ausführungsform ist jedoch nicht bevorzugt, weil die Herstellung der entsprechenden Polyorganosiloxane aufwändiger ist.

Als R¹ kommen beispielsweise Cycloalkenyl, Alkenyl, Vinyl, Allyl, Norbornyl, (Di)cyclopentenyl oder von Methacrylat oder Acrylat abgeleitete Gruppen in Frage. Bevorzugte einwertige Reste R¹ sind abgeleitet von Cyclohexen und (Meth)acrylat, die über eine Kohlenwasserstoffkette, die mit ein oder mehreren Heteroatomen wie Sauerstoff oder Schwefel substituiert und/oder von ein oder mehreren Heteroatomen wie Sauerstoff und Schwefel unterbrochen sein kann, an das Grundgerüst des Polyorganosiloxans gebunden sind.

Besonders bevorzugte Beispiele für R¹ sind die folgenden Gruppen

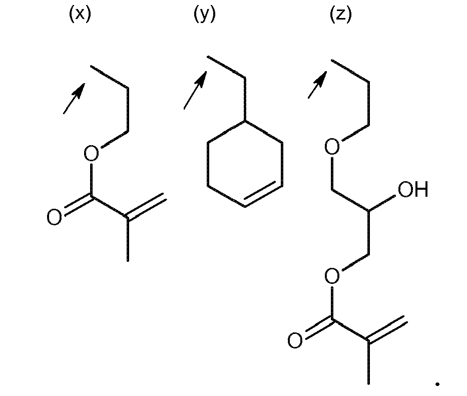

Dabei ist das Kohlenstoffatom, das an das Siliziumatom gebunden ist, jeweils mit einem Pfeil gekennzeichnet.

Diese Funktionalisierungen sind zugänglich durch Umsetzung einer SiH-Einheit mit einer Verbindung, die eine der Hydrosilylierung zugängliche Doppelbindung aufweist, wie beispielsweise:
(a) Allyl(meth)acrylat,
(b) 4-Vinylcyclohexen oder
(c) Allylglycidylether mit anschließender Öffnung des Epoxidrings durch Umsetzung mit (Meth)acrylsäure.

Besonders bevorzugt ist die Umsetzung c), wodurch die obige Struktur (z) gebildet wird. Polyorganosiloxane dieses allgemeinen Typs sind beispielsweise aus der EP 0 269 114 A2 und der DE 30 44 237 A1 bekannt.

Die Zahl der Kohlenstoffatome zwischen dem Siliziumatom, das die Gruppe R¹ trägt, und der Kohlenstoff-Kohlenstoff-Mehrfachbindung beträgt vorzugsweise 1 bis 10, bevorzugter 2 bis 6, wie beispielsweise 4.

In einer bevorzugten Ausführungsform weist das erfindungsgemäß eingesetzte Polyorganosiloxan eine (oder mehrere) Vinylgruppe(n) auf, die direkt an ein Siliziumatom gebunden ist (sind); in dieser bevorzugten Ausführungsform sind neben der (den) Vinylgruppe(n) noch ein (oder mehrere) andere Anteil(e) R¹ vorhanden. Alternativ ist eine ebenfalls bevorzugte Ausführungsform, bei der das erfindungsgemäß verwendete Polyorganosiloxan kein direkt an ein Siliziumatom gebundenes Vinyl aufweist.

In einer bevorzugten Ausführungsform ist R¹ in dem erfindungsgemäß verwendeter Polyorganosiloxan als Teil der Struktureinheit I vorhanden

[R¹ₓRₐSiO_{[4-(x+a)]/2}] (I)

wobei x gleich 1, 2 oder 3 und vorzugsweise 1 ist, a gleich 0, 1 oder 2, vorzugsweise 1 oder 2 ist, und R ein einwertiger organischer Rest ist. Vorzugsweise ist R ausgewählt aus Methyl, Ethyl, Propyl oder Phenyl, und R besonders bevorzugt Methyl ist.

Bevorzugte Struktureinheiten I mit x = 1 sind eine difunktionelle Struktureinheit I^{D} mit a = 1:

[R¹RSi0_{2/2]} , (I^{D})

und eine monofunktionelle Struktureinheit I^{M} mit a = 2:

[R¹R₂SiO_{1/2]}. (I^{M})

Wie erwähnt weisen erfindungsgemäß eingesetzte Polyorganosiloxane keinen Kohlenwasserstoffanteil mit einer Kettenlänge von 5 bis 50 Kohlenstoffatomen auf.

### 2. Struktur des Polyorganosiloxans

Neben der erwähnten und vorzugsweise vorhandenen Struktureinheit I weisen erfindungsgemäße Polyorganosiloxane vorzugsweise auch die difunktionelle Struktureinheit II^{D} auf:

[R'₂SiO_{2/2}] (II^{D})

wobei die Reste R' gleich oder verschieden sind (und vorzugsweise gleich sind) und ausgewählt sind aus linearen, verzweigten oder cyclischen organischen Resten, die über ein Sauerstoffatom gebunden sein können, und die Reste R' vorzugsweise Methyl, Ethyl, Propyl und Phenyl sind, insbesondere Methyl.

Bevorzugt ist (sind) in dem erfindungsgemäßen Polyorganosiloxan auch eine oder - was besonders bevorzugt ist - zwei monofunktionelle Struktureinheiten III^{M} vorhanden:

[R''₃SiO_{1/2}] , (III^{M})

wobei die Reste R" gleich oder verschieden sind und ausgewählt sind aus Hydroxy und linearen, verzweigten oder cyclischen organischen Resten, die über ein Sauerstoffatom gebunden sein können, und die Reste R" vorzugsweise Hydroxy, Methyl, Ethyl, Propyl und Phenyl sind, insbesondere Hydroxy und Methyl. In einer besonders bevorzugten Ausführungsform sind die Reste R" gleich und sind Methylgruppen.

Eine bevorzugte Struktur eines erfindungsgemäßen Polyorganosiloxans ist wie folgt:

[I^{D}]ₘ[I^{M}]ₙ[II^{D}]ₒ[[III^{M}]₍₂₋ₙ₎,

wobei
(i) m im Bereich von 0 bis 40 liegt und n 0, 1 oder 2 sein kann, mit der Maßgabe, dass die Summe (m + n) mindestens 1 beträgt, und wobei die Summe (m + n) vorzugsweise im Bereich bis 20 liegt,
(ii) o im Bereich von 0 bis 1000 liegt und
(iii) die Summe (m + o + 2) mindestens 3 beträgt.

Dabei sind die difunktionellen Struktureinheiten I^{D} und II^{D} in dem erfindungsgemäßen Polyorganosiloxan typischerweise und vorzugsweise nicht als Block angeordnet, sondern entlang der Polysiloxankette statistisch verteilt. Für den Fachmann ist außerdem klar, dass die Parameter m, n und o Durchschnittswerte sind, weil die erfindungsgemäßen Polyorganosiloxane bei der Herstellung typischerweise nicht als einheitliche Verbindungen anfallen.

In einer bevorzugten Ausführungsform ist n gleich Null (0), das heißt die Funktionalisierung R¹ ist in dem Polyorganosiloxan in difunktionellen (brückenständigen) Struktureinheiten I^{D} enthalten. Eine derartige Ausführungsform ist vor allem dann bevorzugt, wenn das erfindungsgemäß eingesetzte Polyorganosiloxan vor allem die Vernetzung des Kautschuks bei der Vulkanisation fördern soll.

In einer weiteren bevorzugten Ausführungsform ist n gleich 1 oder 2 und vorzugsweise 2, das heißt die Funktionalisierung R¹ ist in dem Polyorganosiloxan (zumindest auch) in monofunktionellen (endständigen, terminalen) Struktureinheiten I^{M} enthalten. Eine derartige Ausführungsform ist vor allem dann bevorzugt, wenn das erfindungsgemäß eingesetzte Polyorganosiloxan vornehmlich zur Kettenverlängerung des Kautschuks bei der Vulkanisation dienen soll.

In einer bevorzugten Ausführungsform beträgt die Gesamtzahl der Siloxaneinheiten der erfindungsgemäßen Polyorganosiloxane (m + o + 2) 8 bis 1000, bevorzugter 10 bis 250, insbesondere 15 bis 100, wie 20 bis 90.

In einer weiteren bevorzugten Ausführungsform beträgt die Summe der funktionalisierten Siloxaneinheiten in den erfindungsgemäßen Polyorganosiloxanen (m + n) 1,0 bis 15, bevorzugter 1,5 bis 10, wie beispielsweise etwa 2.

Die Zahl der nicht mit Gruppen R¹ substituierten difunktionellen Siloxaneinheiten II^{D} (d.h. o) in den erfindungsgemäßen Polyorganosiloxanen beträgt vorzugsweise 6 bis 1000, bevorzugter 8 bis 150, insbesondere 13 bis 90, wie 18 bis 80.

Es ist erfindungsgemäß möglich, dass das erfindungsgemäß eingesetzte Polyorganosiloxan die Kohlenstoff-Kohlenstoff-Mehrfachbindung als Anteil eines 7 oder mehr Kohlenstoffatome aufweisenden Substituenten enthält. Dann ist der restliche Anteil dieses Substituenten (d.h. abzüglich der Kohlenstoffatome jeder Kohlenstoff-Kohlenstoff-Mehrfachbindung) jedoch kein Kohlenwasserstoffanteil mit 5 bis 50 Kohlenstoffatomen, sondern weist ein oder mehrere Heteroatome auf, insbesondere Sauerstoffatome.

Erfindungsgemäße Polyorganosiloxane können als bei Raumtemperatur (25°C) flüssige Verbindungen mit einer hohen Viskosität vorliegen. In Abhängigkeit von u.a. der Länge der Siloxankette (d.h. Summe der SiO-Einheiten, Summe (m+o+2), ab etwa 30) können die erfindungsgemäßen Polyorganosiloxane bei Raumtemperatur fest sein.

Es ist möglich, das erfindungsgemäße Polyorganosiloxan als Masterbatch einzusetzen, der
a) einen oder mehrere Kautschuke und
b) ein oder mehrere erfindungsgemäße Polyorganosiloxane enthält.

Bevorzugt enthält der Masterbatch 0,5 bis 30 Gewichtsteile erfindungsgemäßes Polyorganosiloxan, bevorzugter 0,5 bis 20 Gewichtsteile und insbesondere 0,5 bis 10 Gewichtsteile Polyorganosiloxan, bezogen auf 100 Gewichtsteile Kautschuk (phr, parts per hundred parts rubber). Typischerweise werden in dem Masterbatch als Kautschuke peroxidisch vernetzbare Typen wie beispielsweise Naturkautschuk (NR), Polybutadien (BR), Acrylnitril-Butadien-Kautschuk (NBR, HNBR), Ethylen-Propylen-Kautschuk (EPM, EPDM), chloriertes oder chlorsulfoniertes Polyethylen (CM, CSM), Terpolymere des Epichlorhydrin-Kautschuks (GECO), Fluorkautschuke (FKM, FFKM, TFE/P), Acrylatkautschuke (ACM, AEM), Ethylen-Vinylacetat-Kautschuk (EVA, EVM), Silikonkautschuk (VMQ, PMQ, PVMQ, FVMQ), Polyoctenamer (Vestenamer), Polyurethan-Kautschuk oder thermoplastische Elastomere (TPE) verwendet.

Der Einsatz eines Masterbatch erleichtert die Einarbeitung des erfindungsgemäßen Polyorganosiloxans in einen Kautschuk.

Darüber hinaus ist es möglich, das erfindungsgemäße Polyorganosiloxan in Form einer Abmischung einzusetzen, die
a) ein oder mehrere feste Trägermaterialien (vorzugsweise ausgewählt aus anorganischen Füllstoffen (wie beispielsweise Kieselsäure) oder wachsartigen Materialien (wie beispielsweise Polyethylenwachse)) und
b) ein oder mehrere erfindungsgemäß verwendete Polyorganosiloxane enthält.

Das Gewichtsverhältnis von a) Trägermaterial zu b) erfindungsgemäßem Polyorganosiloxan in der Abmischung beträgt vorzugsweise 10/90 bis 90/10, bevorzugter 20/80 bis 80/20 und besonders bevorzugt etwa 60/40. Bevorzugte Materialien für Abmischungen sind Kieselsäuren oder andere anorganische Füllstoffe wie beispielsweise Kreide oder wachsartige Materialien wie beispielsweiser Polyethylenwachse.

Der Einsatz einer Abmischung erleichtert insbesondere die Handhabung der erfindungsgemäßen Polyorganosiloxane, wenn diese bei Raumtemperatur flüssig sind.

Verfahren zur Herstellung der erfindungsgemäßen Polyorganosiloxane sind im Stand der Technik bekannt, wobei u.a. auf die EP 0 269 144 A2 und die DE 30 44 237 A1 verwiesen wird.

### 3. Verwendung und Vulkanisationsverfahren

Die Polyorganosiloxane werden erfindungsgemäß vorzugsweise bei der Verarbeitung von Kautschuk eingesetzt, beispielsweise zur Verbesserung des Releaseverhaltens auf dem Walzwerk bzw. im Innenmischer, Verringerung der Mooney-Viskosität, Erhöhung des Moduls der vulkanisierten Kautschukmischung, Zugfestigkeit, Verringerung des Druckverformungsrestes, Verringerung der Reißdehnung und/oder Verringerung des Weiterreißwiderstands. Das erfindungsgemäße Polyorganosiloxan wird gegebenenfalls in Form des Masterbatch oder der Abmischung eingesetzt.

Bevorzugt ist der Kautschuk bzw. die Kautschukphase peroxidisch vulkanisierbar. Beispielsweise können Naturkautschuk (NR), Polybutadien (BR), Acrylnitril-Butadien-Kautschuk (NBR, HNBR), Ethylen-Propylen-Kautschuk (EPM, EPDM), chloriertes oder chlorsulfoniertes Polyethylen (CM, CSM), Polyisoprenkautschuk (IR), Styrol-Butadien-Kautschuk (SBR), Chloroprenkautschuk (CR), Polyethylen (PE), Acrylnitril-Butadien-Kautschuk (ABS), Terpolymere des Epichlorhydrin-Kautschuks (GECO), Fluorkautschuke (FKM, FFKM, TFE/P), Acrylatkautschuke (ACM, AEM), Ethylen-Vinylacetat-Kautschuk (EVA, EVM), Silikonkautschuk (VMQ, PMQ, PVMQ, FVMQ), Polyoctenamer (Vestenamer), Polyurethan-Kautschuk oder thermoplastische Elastomere (TPE). Vorzugsweise wird das erfindungsgemäße Polyorganosiloxan jedoch nicht bei Silikonkautschuk eingesetzt.

Besonders bevorzugt sind EPM, EPDM, CSM, FPM, IR, BR, CR, AEM, EVM, EVA, NBR und HNBR, wobei wie erwähnt auch Mischungen der genannten Kautschuktypen eingesetzt werden können.

Eine typische Menge erfindungsgemäß eingesetztes Polyorganosiloxan beträgt 0,1 bis 50 Gewichtsteile pro 100 Gewichtsteile Kautschuk(mischung) (phr, parts per hundred parts rubber), vorzugsweise 0,5 bis 20 phr, insbesondere 1 bis 10 phr, wie 2 bis 8 phr, beispielsweise etwa 4 phr.

Die Erfindung betrifft darüber hinaus ein Verfahren zur Vulkanisation von Kautschuk, bei dem eine Vulkanisationsmischung, die
(i) ein oder mehrere peroxidisch vernetzbare Kautschuke (wie beispielsweise NR, BR, NBR, HNBR, EPM, EPDM, CM, CSM, GECO, FKM, FFKM, TFE/P, ACM, AEM, EVA, EVM, VMQ, PMQ, PVMQ, FVMQ oder TPE),
(ii) ein oder mehrere peroxidische Vulkanisationsmittel und
(iii) ein oder mehrere erfindungsgemäße Polyorganosiloxane enthält,

bei einer Temperatur von beispielsweise 120°C bis 250°C peroxidisch vulkanisiert wird. Durch die Vulkanisation erfolgt die reaktive Vernetzung der erfindungsgemäß verwendeten Polyorganosiloxane über den ungesättigten Anteil R¹.

Eine Vulkanisationsmischung enthält vorzugsweise ferner Zuschlagstoffe wie Füllstoffe (beispielsweise Ruß, Kieselsäure, Calciumcarbonat, Bariumsulfat, Zinkoxid, Magnesiumoxide, Aluminiumoxide, Eisenoxide, Silikate), Weichmacheröle (beispielsweise Mineralöle), Alterungsschutzmittel, Vulkanisationshilfsmittel Peroxid, weitere Vulkanisationshilfsmittel (beispielsweise Schwefel), und Flammschutzmittel (beispielsweise Aluminiumhydroxid, Magnesiumhydroxid, Calciumhydroxid oder Phosphorverbindungen) in üblichen Mengen.

### Beispiele

### (i) Herstellung von erfindungsgemäßen Polyorganosiloxanen

Es wurden die folgenden erfindungsgemäßen Polyorganosiloxane A, B und C hergestellt:

### Polyorganosiloxan A:

In einer ersten Reaktionsstufe werden in einem Dreihalskolben 25,67 g (0,191 mol) Tetramethyldisiloxan und 677,68 g (2,284 mol) Octamethylcyclotetrasiloxan unter einem säureaktivierten Calcium-Betonit Katalysator (3%) zu einem Hydrogendimethylpolysiloxan (M^{H}D₅₅M^{H}) umgesetzt.

In der zweiten Reaktionsstufe werden 234,10 g (0,056 mol) des Hydrogendimethylpolysiloxan und 1,59 g Allylglycidether (0,014 mol) vorgelegt und auf 95°C erwärmt. Anschließend erfolgt die Zugabe des Katalysators (7 ppm Speier Katalysator) und eine langsame Zugabe von 14,31 g (0,139 mol) Allylglycidether. Die danach stattfindende Reaktion läuft bei 100°C ab und wird über eine infrarotspektroskopische HSi-Messung überwacht. Ist kein HSi mehr messbar, dann ist die Reaktion abgeschlossen und es erfolgt eine Destillation überschüssiger Bestandteile.

In der dritten Reaktionsstufe werden 100 g des unter Stufe 2 entstandenen Produktes mit einem Katalysator (1.4-Diazabicyclo[2.2.2]octan 0,5%) und einem Inhibitor (Butylhydroxytoluol 0,2%) auf 80°C erwärmt und es werden 3,91 g Methacrylsäure langsam zugetropft. Die danach stattfindende Reaktion läuft bei 95°C ab und wird über die Säurezahl überwacht. Nach erfolgter Reaktion werden überschüssige Bestandteile über eine Destillation entfernt.

A ist somit ein langkettiges, di-end-funktionalisiertes (von M^{H}₂D₅₅ durch Umsetzung mit Allylglycidether und dann Öffnung des Glycidethers mit Methacrylsäure abgeleitetes) Polyorganosiloxan.

### Polyorganosiloxan B:

In einer ersten Reaktionsstufe werden in einem Dreihalskolben 69,7 g (0,519 mol) Tetramethyldisiloxan und 636,63 g (2,146 mol) Octamethylcyclotetrasiloxan unter einem säureaktivierten Calcium-Betonit Katalysator (3%) zu einem Hydrogendimethylpolysiloxan (M^{H}D_{18,2}M^{H}) umgesetzt.

In der zweiten Reaktionsstufe werden 212,75 g (0,143 mol) des Hydrogendimethylpolysiloxans vorgelegt und auf 50°C erwärmt. Anschließend erfolgt die Zugabe des Katalysators (8 ppm Speier Katalysator) und eine langsame Zugabe von 37,25 g (0,327 mol) Allylglycidether. Die danach stattfindende Reaktion läuft bei 60°C ab und wird über eine infrarotspektroskopische HSi-Messung überwacht. Ist kein HSi mehr messbar, dann ist die Reaktion abgeschlossen und es erfolgt eine Destillation überschüssiger Bestandteile.

In der dritten Reaktionsstufe werden 100 g des unter Stufe 2 entstandenen Produktes mit einem Katalysator (1.4-Diazabi-cyclo[2.2.2]octan 0,5%) und einem Inhibitor (Butylhydroxytoluol 0,2%) auf 80°C erwärmt, und es werden 10,25 g Methacrylsäure langsam zugetropft. Die danach stattfindende Reaktion läuft bei 95°C ab und wird über die Säurezahl überwacht. Nach erfolgter Reaktion werden überschüssige Bestandteile über eine Destillation entfernt.

B ist ein A entsprechendes, jedoch kurzes (di-end-funktionalisiertes) Polyorganosiloxan.

### Polyorganosiloxan C:

In einer ersten Reaktionsstufe werden in einem Dreihalskolben 44,15 g (0,018 mol) Polyhydrogenmethylsiloxan, 47,06 g (0,350 mol) Tetramethyldisiloxan und 611,07 g (2,060 mol) Octamethylcyclotetrasiloxan unter Trifluormethansulfonsäure (0,004%) zu einem Hydrogendimethylpolysiloxan (M^{H}_{1,95}D^{H}₂M_{0,1}D₂₄ umgesetzt.

In der zweiten Reaktionsstufe werden 327,14 g (0,160 mol) des Hydrogendimethylpolysiloxan vorgelegt und auf 70°C erwärmt. Anschließend erfolgt die Zugabe des Katalysators (10 ppm Speier Katalysator) und eine langsame Zugabe von 78,26 g (0,686 mol) Allylglycidether. Die danach stattfindende Reaktion läuft bei 90°C ab und wird über eine infrarotspektroskopische HSi-Messung überwacht. Ist kein HSi mehr messbar ist die Reaktion abgeschlossen und es erfolgt eine Destillation überschüssiger Bestandteile.

In der dritten Reaktionsstufe werden 260,82 g (0,105 mol) des unter Stufe 2 entstandenen Produktes mit einem Katalysator (1.4-Diazabicyclo[2.2.2]octan 0,5%) und einem Inhibitor (Butylhydroxytoluol 0,2%) auf 80°C erwärmt und es werden 39,18 g (0,455 mol) Methacrylsäure langsam zugetropft. Die danach stattfindende Reaktion läuft bei 95°C ab und wird über die Säurezahl überwacht. Nach erfolgter Reaktion werden überschüssige Bestandteile über eine Destillation entfernt.

C ist ein kurzes, di-end- und di-seitenständigfunktionalisiertes (von M^{H}_{1,95}D^{H}₂M_{0,1}D₂₄ abgeleitetes) Polyorganosiloxan.

### (ii) Herstellung von Vulkanisationsmischungen

Aus 100 Gewichtsteilen EPDM-Kautschuk (Keltan 2340 A), 100 phr kalziniertes Kaolin (Polestar 200 R) und 30 phr paraffinisches Mineralöl (Sunpar 2280) wurde im Upside-down-Mischverfahren eine Mischung hergestellt.

Anschließend wurde die Mischung in 6 gleiche Gewichtsteile aufgeteilt und auf dem Walzwerk jeweils 6 phr Peroxid (Trigonox 101-45B-pd) aufgemischt. Zu einem Gewichtsteil wurden nur 6 phr Peroxid (Trigonox 101-45B-pd) gegeben (Kontrolle/Blindprobe, Nr. 1). Den fünf weiteren Gewichtsteilen wurden jeweils 6 phr Peroxid (Trigonox 101-45B-pd) sowie eine bestimmte Menge Polyorganosiloxan und/oder Verarbeitungshilfe und/oder Coagens mit einem Walzwerk aufgemischt (siehe nachfolgende Tabelle 1).

**Tabelle 1**

| Vulkanisationsmischung | Polyorganosiloxan | Verarbeitungshilfe | Coagens ^{e)} |
|---|---|---|---|
| 1 ^{a)} | - | - | - |
| 2 ^{b)} | - | 2 phr Struktol WS 180 | 2 phr TAC 70% DL |
| 3 ^{c)} | - | - | 2 phr TAC 70% DL |
| 4 ^{d)} | 2 phr A | - | - |
| 5 ^{d)} | 2 phr B | - | - |
| 6 ^{d)} | 2 phr C | - | - |

| | | | |
|---|---|---|---|
| a) Vergleich: Vulkanisationsmischung ohne Polyorganosiloxan (Blindprobe), ohne Verabeitungshilfe und ohne Coagens. b) Vergleich: Mit 2 phr herkömmlicher Verarbeitungshilfe Struktol^{®} WS 180 sowie 2 phr Coagens TAC. c) Vergleich: mit 2 phr Coagens TAC. d) Erfindungsgemäß. e) Dry Liquid aus 70% TAC mit Kieselsäure als Trägermaterial | | | |

Die Mooney-Viskosität und weitere rheologische Eigenschaften der so erhaltenen Vulkanisationsmischungen sind nachfolgend in Tabelle 2 angegeben.

**Tabelle 2**

| | 1 | 2 | 3 | 4 | 5 | 6 |
|---|---|---|---|---|---|---|
| Mooney ML (1+4) 100°C (ME) ^{a)} | 36 | 32 | 36 | 35 | 35 | 35 |
| Mooney scorch ML 135°C TS5 (min) | 25,1 | 25,5 | 24,6 | 22,0 | 21,7 | 20,2 |
| Rheometer MDR 2000 ^{b)} | | | | | | |

| **bei 180 °C, Messzeit: 20 min** | | | | | | |
|---|---|---|---|---|---|---|
| Drehmoment ML (dNm) | 0,54 | 0,43 | 0,55 | 0,51 | 0,5 | 0,53 |
| Drehmoment MH (dNm) | 14,89 | 16,8 | 17,53 | 15,86 | 14, 64 | 17,2 |
| tc 10 % (min) | 0, 69 | 0, 81 | 0,75 | 0, 68 | 0,71 | 0, 69 |
| tc 90 % (min) | 6, 64 | 7,19 | 6, 64 | 7, 02 | 7,11 | 6, 96 |
| Verlustw. tan delta (MH) | 0, 05 | 0,03 | 0,03 | 0,03 | 0, 04 | 0,03 |

| **bei 200 °C, Messzeit: 5 min** | | | | | | |
|---|---|---|---|---|---|---|
| Drehmoment ML (dNm) | 0,56 | 0,44 | 0, 59 | 0,54 | 0,57 | 0, 61 |
| Drehmoment MH (dNm) | 13,17 | 15,38 | 15,36 | 13,47 | 13,39 | 14,57 |
| tc 10 % (min) | 0,34 | 0,35 | 0,34 | 0,33 | 0,33 | 0,33 |
| tc 90 % (min) | 1,38 | 1,4 | 1,42 | 1,39 | 1,38 | 1,39 |
| Verlustw. Tan delta (MH) | 0, 05 | 0, 04 | 0, 04 | 0, 05 | 0, 05 | 0, 04 |

| | | | | | | |
|---|---|---|---|---|---|---|
| a) DIN 53523 Teil 3: Prüfung von Kunststoffen und Elastomeren; Prüfung mit dem Scherscheiben-Viskosimeter nach Mooney, Bestimmung der Viskosität nach Mooney. b) Hersteller: Alpha Technologies, Akron, Ohio, USA. | | | | | | |

Aus den Ergebnissen für die Mooney-Viskosität ergibt sich, dass diese trotz Einsatz der Polyorganosiloxane als Additiv bei den erfindungsgemäßen Versuchen 4 bis 6 im Wesentlichen unverändert bleibt.

### (v) Herstellung von Vulkanisaten

Aus den Vulkanisationsmischungen 1 bis 6 wurden Prüfplatten von 2 mm und 6 mm Dicke hergestellt, die bei 180°C vulkanisiert wurden. Die erhaltenen Prüfkörper 1 bis 6 zeigten die in Tabelle 3 gelisteten Eigenschaften.

**Tabelle 3**

| **Eigenschaften des Vulkanisates** | 1 | 2 | 3 | 4 | 5 | 6 |
|---|---|---|---|---|---|---|
| Vulk.-Zeit 2 mm (min) | 20 | 20 | 20 | 20 | 20 | 20 |
| Vulk.-Zeit 6 mm (min) | 22 | 22 | 22 | 22 | 22 | 22 |
| Härte SH A (SH E) | 51 | 54 | 55 | 54 | 54 | 55 |
| Zugfestigkeit (MPa) ^{a)} | 4, 6 | 3,4 | 4,2 | 4,3 | 3, 6 | 5, 6 |
| Bruchdehnung (%) ^{a)} | 548 | 393 | 351 | 390 | 457 | 369 |
| Modul 100 % ^{a)} | 1, 7 | 1,8 | 2,1 | 2,1 | 1,9 | 2,4 |
| Modul 300 % ^{a)} | 3 | 2, 9 | 4 | 4 | 3 | 5,1 |
| DVR 24h/100°C 25% (%) ^{b)} | 12,2 | 8,7 | 7,7 | 7,4 | 9 | 7,6 |
| DVR 3d/70°C 25% (%) ^{b)} | 13,1 | 8,2 | 8 | 8, 9 | 10,3 | 8 |
| Weiterreißwiderstand trouser (kN/m) ^{c)} | 2, 9 | 2,4 | 2,4 | 2, 9 | 2,5 | 2,8 |

| | | | | | | |
|---|---|---|---|---|---|---|
| a) DIN 53504: Prüfung von Kunststoffen und Elastomeren; Bestimmung von Reißfestigkeit, Zugfestigkeit, Reißdehnung und Spannungswert im Zugversuch. Modulwerte in MPa. b) DIN ISO 815: Bestimmung des Druckverformungsrestes bei Umgebungs-, erhöhten und niedrigen Temperaturen: c) DIN ISO 34-1: Elastomere oder thermoplastische Elastomere - Bestimmung des Weiterreißwiderstandes. | | | | | | |

Bemerkenswert ist bei den erfindungsgemäßen Versuchen 4 bis 6 im Vergleich mit der Basismischung (Vergleichsversuch 1) sowie den Vergleichsversuchen 2 und 3, dass sich die mechanischen Eigenschaften verbessern lassen. So zeigt Versuch 6 eine deutliche Verbesserung der Zugfestigkeit, und zwar ohne dass die Bruchdehnung stark sinkt. Versuch 5 zeigt - im Vergleich mit dem Versuch 2 - eine unveränderte oder sogar leicht verbesserte Zugfestigkeit, während die Bruchdehnung deutlich verbessert wird. Versuch 4 zeigt dann - wiederum im Vergleich mit Versuch 2 - eine deutlich verbesserte Zugfestigkeit bei im Wesentlichen unveränderter Bruchdehnung.

## Patentansprüche

1. Verwendung eines Polyorganosiloxans mit 3 oder mehr Siloxaneinheiten, das einen oder mehrere organische Anteile R¹ aufweist, wobei
- R¹ eine oder mehrere Kohlenstoff-Kohlenstoff-Mehrfachbindungen besitzt und
- die Anwesenheit von einem oder mehreren Kohlenwasserstoffanteilen mit einer Kettenlänge von 5 bis 50 Kohlenstoffatomen in dem Polyorganosiloxan ausgeschlossen ist,
als Additiv bei der Verarbeitung von Kautschuk.

2. Verwendung nach Anspruch 1 oder 2, **dadurch gekennzeichnet, dass** die Kohlenstoff-Kohlenstoff-Mehrfachbindung eine Doppelbindung ist.

3. Verwendung nach einem der vorhergehenden Ansprüche, **dadurch gekennzeichnet, dass** der organische Anteil R¹ ein einwertiger Rest ist.

4. Verwendung nach Anspruch 4, **dadurch gekennzeichnet, dass** der Rest R¹ (x), (y) oder (z) ist:

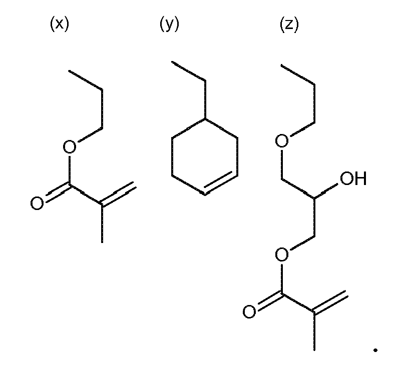

5. Verwendung nach einem der vorhergehenden Ansprüche, **dadurch gekennzeichnet, dass** das Polyorganosiloxan die Struktureinheit I aufweist
[R¹ₓRₐSiO_{[4-(x+a)]/2}], (I)
wobei x gleich 1, 2 oder 3 und vorzugsweise 1 ist, a gleich 0, 1 oder 2, vorzugsweise 1 oder 2 ist und R ein einwertiger organischer Rest ist, wobei R vorzugsweise ausgewählt ist aus Methyl, Ethyl, Propyl oder Phenyl, und R besonders bevorzugt Methyl ist.

6. Verwendung nach einem der Ansprüche vorhergehenden Ansprüche, **dadurch gekennzeichnet, dass** das Polyorganosiloxan die folgende Struktur besitzt:
[I^{D}]ₘ[I^{M}]ₙ[II^{D}]ₒ[III^{M}] ₍₂₋ₙ₎,
wobei
(i) m im Bereich von 0 bis 40 liegt und n 0, 1 oder 2 sein kann, mit der Maßgabe, dass die Summe (m + n) mindestens 1 beträgt und wobei die Summe (m + n) vorzugsweise im Bereich bis 20 liegt,
(ii) o im Bereich vom 0 bis 1000 liegt,
(iii) die Summe (m + o + 2) mindestens 3 beträgt,
(iv) [I^{D}] die difunktionelle Struktureinheit [R¹RSiO_{2/2}] bedeutet, wobei R ein einwertiger organischer Rest ist, vorzugsweise Methyl,
(v) [I^{M}] die monofunktionelle Struktureinheit [R¹R₂SiO_{1/2}] bedeutet, wobei R ein einwertiger organischer Rest ist, vorzugsweise Methyl,
(vi) [II^{D}] die difunktionelle Struktureinheit [R'₂SiO_{2/2}] bedeutet, wobei die Reste R' gleich oder verschieden sind und ein organischer Rest sind, vorzugsweise Methyl, und
(vii) [III^{M}] die monofunktionelle Struktureinheit [R"₃SiO_{1/2}] bedeutet, wobei die Reste R" gleich oder verschieden sind und ausgewählt sind aus Hydroxy und linearen, verzweigten oder cyclischen organischen Resten, vorzugsweise Hydroxy und Methyl.

7. Verwendung nach Anspruch 6, **dadurch gekennzeichnet, dass** m gleich 2 ist.

8. Verwendung nach Anspruch 6 oder 7, **dadurch gekennzeichnet, dass** n gleich 1 oder 2 ist, vorzugsweise 2.

9. Verwendung nach einem der vorhergehenden Ansprüche, **dadurch gekennzeichnet, dass** die Verarbeitung eine peroxidische Vulkanisation ist.

10. Verwendung nach einem der vorhergehenden Ansprüche, **dadurch gekennzeichnet, dass** das Additiv zur Verbesserung des Releaseverhaltens auf dem Walzwerk bzw. im Innenmischer, Verringerung der Mooney-Viskosität, Erhöhung des Moduls der vulkanisierten Kautschukmischung, Zugfestigkeit, Verringerung des Druckverformungsrestes, Verringerung der Reißdehnung und/oder Verringerung des Weiterreißwiderstands eingesetzt wird.

11. Verwendung nach einem der vorhergehenden Ansprüche, **dadurch gekennzeichnet, dass** der Kautschuk ausgewählt ist aus NR, BR, NBR, HNBR, EPM, EPDM, CR, PE, CM, CSM, GECO, FKM, FFKM, TFE/P, ACM, AEM, EVA, EVM, VMQ, PMQ, PVMQ, FVMQ und TPE.

12. Masterbatch, der
a) einen oder mehrere Kautschuke und
b) ein oder mehrere Polyorganosiloxane wie in einem der Ansprüche 1 bis 8 definiert enthält.

13. Abmischung, die
a) ein oder mehrere feste Trägermaterialien und
b) ein oder mehrere Polyorganosiloxane wie in einem der Ansprüche 1 bis 8 definiert enthält.

14. Verfahren zur Vulkanisation von Kautschuk, bei dem eine Vulkanisationsmischung, die
(i) ein oder mehrere peroxidisch vernetzbare Kautschuke,
(ii) ein oder mehrere peroxidische Vulkanisationsmittel und
(iii) ein oder mehrere Polyorganosiloxane wie in einem der Ansprüche 1 bis 8 definiert
enthält, peroxidisch vulkanisiert wird.

15. Vulkanisierter Kautschuk, herstellbar oder hergestellt nach dem Verfahren gemäß Anspruch 14.
